# EUROPÄISCHE PATENTSCHRIFT

(11) **EP 2 775 369 B1**
(45) Veröffentlichungstag und Bekanntmachung des Hinweises auf die Patenterteilung: **19.02.2020**
(21) Anmeldenummer: 13158467.4
(22) Anmeldetag: 08.03.2013
(51) Int. Cl.: G05D 23/19, F24D 19/10, F24F 11/46, F24F 11/47

(54) **Steuerung und Regelung für eine Raumkomfortgrösse**
Control and regulation of a room comfort value
Commande et régulation pour une grandeur de confort ambiant

(43) Veröffentlichungstag der Anmeldung: 10.09.2014
(73) Patentinhaber: Siemens Schweiz AG, 8047 Zürich (CH)
(72) Erfinder: Buob, Christoph, 6004 Luzern (CH); Fritsche, Gallus, 8046 Zürich (CH); Reichlin, Armin, 6043 Adligenswil (CH); Soenius, Ruth J., New York, 10016 (US)
(74) Vertreter: Maier, Daniel Oliver

(56) Entgegenhaltungen:
- EP-A1- 0 590 250
- EP-A1- 0 883 050
- WO-A1-2013/059671
- US-A1- 2005 119 766
- US-A1- 2012 165 993

## Beschreibung

Die vorliegende Erfindung betrifft ein Verfahren, eine Bedienungseinrichtung, sowie eine Anordnung zur Steuerung und Regelung mindestens einer Raumkomfortgrösse in einem Gebäude.

Solche Verfahren, Bedienungseinrichtungen und Anordnungen eignen sich beispielsweise zum Heizen, Kühlen, Lüften oder Beleuchten von Räumen oder Raumzonen in Gebäuden und sind beispielsweise in einem Gebäudeautomationssystem (z.B. ein HLK-System) implementiert. Zu steuernde bzw. zu regelnde Raumkomfortgrössen sind beispielsweise die Temperatur, die Luftfeuchtigkeit oder die Luftqualität im Gebäude.

Heutzutage ist ein HLK-System (Heizung, Lüftung, Kühlung) für ein Gebäude ganzjährig und vollautomatisch im Betrieb, um den Komfortanspruch der Bewohner bzw. der sich im Gebäude befindlichen Personen unter ökologischen und ökonomischen Gesichtspunkten sicherzustellen. Dies geschieht auf Basis programmierter Gebäude- und Anlagenkennwerte, Umgebungsbedingungen, Sollwerte und Belegungszeiten, z.B. durch programmierte Schaltuhren.

Die dem Automatikbetrieb hinterlegte Programmierung deckt sich aber nicht immer mit den aktuellen Bedürfnissen und Empfindungen der sich im Gebäude befindlichen Personen. Der Benutzer hat zwar die Möglichkeit die Betriebsart des HLK-Systems oder einer Heizungssteuerung temporär zu verändern, eine temporär oder permanent wirkenden Sollwertkorrektur oder eine Kombination davon zu verstellen. In jedem Fall muss der Benutzer zuerst verstehen auf welchen Parameter der Steuerung er einzuwirken hat. Dies erfordert Analyseaufwand auf Seiten des Benutzers. Bei heutigen HLK-Systemen muss der Benutzer aktuell anhand einer Analyse der Betriebsart, des Betriebsniveaus (bestimmt durch Zeitschaltprogramm oder ECO-Automatik) und des Temperatursollwerts bestimmen, auf welche der genannten Grössen er einzuwirken hat um eine gewünschte Temperaturänderung zu bewirken. Das Problem muss heute manuell gelöst werden.

Die Europäische Patentanmeldung EP0590250A1 offenbart z.B. ein Verfahren zur Einstellung der Heizkennlinie eines Heizkreisreglers durch Eingabe eines neuen Raumtemperatur-Sollwertes durch einen Benutzer mittels eines Bedienelementes. Dabei werden durch den Benutzer direkt Einstellparameter des Heizkreisreglers verändert, mit der Gefahr von Fehleingaben.

Es ist Aufgabe der vorliegenden Erfindung ein Verfahren, eine Bedienungseinrichtung, sowie eine Anordnung zur Steuerung und Regelung mindestens einer Raumkomfortgrösse bereitzustellen, um einem Benutzer ein einfaches und sicheres Verändern der Raumkomfortgrösse zu ermöglichen.

Die Patentanmeldung US2005/119766A1 wurde angemeldet am 2. Dezember 2003 und veröffentlicht am 2. Juni 2005. US2005/119766A1 offenbart eine Bedienvorrichtung für einen Regler mit einer Ausserkraftsetzung eines Zeitplans. Die Patentanmeldung US2012/165993A1 wurde angemeldet am 28. Oktober 2011 und veröffentlicht am 8. Juni 2012. US2012/165993A1 lehrt ein selbst-programmierendes Thermostat-System.

Die Aufgabe wird gelöst durch ein Verfahren nach dem unabhängigen Anspruch 1. Heutzutage ist die Steuerung bzw. Regelung des Klimas in Gebäuden (z.B. Bürogebäude, Wohngebäude oder industrielle Fertigungsstätten) sehr komplex und von vielen Parametern (z.B. Parametern hinsichtlich der Energie- oder Kosteneffizienz, saisonaler Heizkennlinien, Temperatursollwert etc.) abhängig. Bei diesen komplexen HLK-Systemen (Heizung, Lüftung, Kühlung) muss der Benutzer, um eine Verstellung richtig zu machen, das Modell der Regelung bzw. Steuerung verstehen, die Ursache analysieren und die richtigen Schlüsse ziehen (Beispiel: Ist es dem Benutzer zu kühl, muss er zuerst verstehen in welcher Betriebsart er ist. Danach kann er entscheiden, ob die Betriebsart angepasst oder der Temperatursollwert höher gestellt werden muss). Die meisten Benutzer sind mit dieser Aufgabe überfordert was dazu führt, dass Fehlmanipulationen gemacht werden. Dies wiederum führt zu "verstellten Anlagen". Der Kunde ist unzufrieden, da der Komfort nicht optimal ist und gleichzeitig ist die Wahrscheinlichkeit gross, dass das System nicht energieoptimal betrieben wird. Das erfindungsgemässe Verfahren nimmt einem Benutzer die Analyse ab. Meldet ein Nutzer ein Bedürfnis an, analysiert das System selbständig, was die Ursache für die Unbehaglichkeit des Nutzers ist und leitet die notwendigen Schlüsse daraus ab. Die Steuerung bzw. Regelung reagiert auf einen Benutzereingriff mit einem temporären Überschreiben von voreingestellten Steuerungs- bzw. Regelungsparametern (z.B. temporärer "Override" von Eco-Funktionen). Unter Eco-Funktionen werden z.B. Einstellparameter zur Energieeffizienz verstanden. Das erfindungsgemässe Verfahren ermöglicht somit u.a. ein hohes Mass an Automatisierung eines Gebäudeautomatisierungssystems. Der Benutzer wird vor spontanen Fehleinstellungen bewahrt. Dies resultiert in einem höheren Komfort für den Benutzer und in einem geringeren Energieverbrauch im Gebäude.

Zu den Raumkomfortgrössen in einem Gebäude zählen u.a. Temperatur, Luftfeuchtigkeit, aber auch die Luftqualität qualifizierende Grössen, wie Gehalt an Sauerstoff, Kohlendioxid oder der Gehalt an flüchtigen organischen Verbindungen (volatile organic compounds VOC), Partikel oder Schadstoffe.

Das vorgeschlagene erfindungsgemässe Verfahren ist als Steuerverfahren, aber auch als Regelverfahren (closed loop control) einsetzbar.

Mit Vorteil erhält ein Benutzer eine Rückmeldung (Feedback) bezüglich der Aktivierung der temporären Veränderung der aktuellen Zustandsdaten des Systems und/oder der Deaktivierung (beim Eintreffen eines entsprechenden Ereignisses; z.B. Ablauf eines definierten Zeitintervalls). Bei der Rückmeldung kann es sich z.B. um eine visuelle Anzeige (z.B. in Textform und/oder als grafisches Symbol (Icon) bzw. LED) an einem Bedienelement handeln.

Eine erste vorteilhafte Ausgestaltung der Erfindung liegt darin, dass das Ereignis im Ablauf einer definierten Zeitspanne liegt. Die Länge der Zeitspanne kann z.B. in der Steuerung bzw. Regelung als voreingestellter Parameter hinterlegt sein. Die Länge der Zeitspanne kann aber auch von einem Benutzer basierend auf seinem individuellen Komfortbedürfnis festgelegt werden. Die Länge der Zeitspanne kann für das gesamte Gebäude komplett (en bloc) oder aber auch für jeden Raum (bzw. jede Zone) separat festgelegt werden.

Eine weitere vorteilhafte Ausgestaltung der Erfindung liegt darin, dass das Ereignis eine weitere Eingabe an der Bedienungseinrichtung ist. Bei der weiteren Eingabe kann es sich z.B. um die erneute Eingabe eines Bedarfssignals handeln. Mit Vorteil wird dadurch ein neues Zeitintervall mit einer weiteren temporären Überschreibung ("Override") der voreingestellten Steuerungs- bzw. Regelungsparameter gestartet. Bei der weiteren Eingabe kann es sich z.B. aber auch um eine Deaktivierung des "temporären Overrides" handeln. Mit Vorteil werden bei einer Deaktivierug des "temporären Overrides" wieder die vor der Aktivierung des "temporären Overrides" gültigen Steuerungs- bzw. Regelungsparameter verwendet.

Eine weitere vorteilhafte Ausgestaltung der Erfindung liegt darin, dass das Ereignis ein Schaltpunkt in einem Zeitschaltprogramm für die Steuerung bzw. Regelung ist. Bei einem Schaltpunkt kann es sich z.B. um den Beginn (oder das Ende) eines Absenkintervalls bzw. eines Komfortintervalls handeln, d.h. um ein Schaltprogrammintervall für ein Zeitschaltprogramm für eine Heizungsregelung bzw. Heizungssteuerung. Ein Absenkintervall entspricht dabei üblicherweise einer Änderung eines Sollwerts mit einem relativ hohen Energieverbrauch auf einen Sollwert mit einem relativ niedrigen Energieverbrauch während eines ausgewählten Zeitabschnitts. Ein Komfortintervall entspricht dabei üblicherweise einer Änderung eines Sollwerts mit einem relativ niedrigen Energieverbrauch auf einen Sollwert mit einem relativ hohen Energieverbrauch während eines ausgewählten Zeitabschnitts.

Eine weitere vorteilhafte Ausgestaltung der Erfindung liegt darin, dass das Ereignis ein der Steuerung bzw. Regelung zugeführtes externes Signal ist. Beim externen Signal kann es sich z.B. um das Signal eines Messwertfühlers handeln. Das Signal des Messwertfühlers kann dabei mit der zu steuernden bzw. zu regelnden Raumkomfortgrösse direkt zusammenhängen oder korrelieren (z.B. Erkennen offener Fenster bei der Temperaturregelung). Das externe Signal kann aber auch unabhängig von der zu steuernden bzw. zu regelnden Raumkomfortgrösse sein und über eine entsprechende Schnittstelle der Steuerung bzw. Regelung gemeldet werden, z.B. von einem Präsenzsensor oder einer Alarmanlage im Gebäude.

Eine weitere vorteilhafte Ausgestaltung der Erfindung liegt darin, dass bei der Analyse des Bedarfssignals Eco-Funktionsparameter des Systems überprüft und bei Bedarf entsprechend verändert werden. Anlagen zum Heizen, Kühlen, Lüften und Klimatisieren von Räumen benötigen Energie. Durch entsprechende Eco-Funktionsparameter in der Steuerung bzw. Regelung einer solchen Anlage wird u.a. sichergestellt, dass die Anlage energieeffizient arbeitet. Zu Eco-Funktionen gehören u.a. das bedarfsabhängige Ein- und Ausschalten einer Heizung, oder das automatische saisonale Umschalten (z.B. durch Erkennen von Winter bzw. Sommer). Parameter für die Einstellung von Eco-Funktionen beruhen u.a. auf empirischen Grössen und werden dediziert für bestimmte Gebäude und entsprechenden Anforderungen eingestellt.

Typische Eco-Funktionen bzw. Eco-Funktionsparameter sind:
- Sommer/Winterumschaltung Heizung bzw. Kühlung
- Aussentemperaturgrenze Kühlung
- Sperrzeiten Heiz-/Kühlbetrieb
- Tagesheizgrenze/Tageskühlgrenze.

Das erfindungsgemässe Verfahren stellt sicher, dass ein Benutzer keine spontanen Fehleinstellungen an den Eco-Funktionsparametern eines HLK-Systems vornehmen kann.

Eine weitere vorteilhafte Ausgestaltung der Erfindung liegt darin, dass bei der Analyse des Bedarfssignals der Zustand eines Zeitschaltprogramms für die Steuerung des Systems überprüft und bei Bedarf entsprechend verändert wird. Durch Zeitschaltprogramme Statuswerte und Sollwertprofile von betriebstechnische Anlagen (z.B. Klima- oder Heizungsanlagen) oder einzelnen Anlagenelementen in Abhängigkeit von Zeit, Wochentag und Datum gesteuert. Auch hier stellt das erfindungsgemässe Verfahren sicher, dass ein Benutzer keine spontanen Fehleinstellungen am Zeitschaltprogramm vornehmen kann.

Eine weitere vorteilhafte Ausgestaltung der Erfindung liegt darin, dass bei der Analyse des Bedarfssignals ein Sollwert für die Raumkomfortgrösse überprüft und bei Bedarf entsprechend verändert wird. Handelt es sich bei der Raumkomfortgrösse um die Raumtemperatur, dann ist der Raumtemperatur-Sollwert derjenige Temperaturwert auf den ein Heizungsregler ausgerichtet ist. Der Raumtemperatur-Sollwert ist neben der Steilheit eine wichtige Kenngrösse für eine Heizkennlinie. Eine Erhöhung des Raumtemperatur-Sollwerts verschiebt die Heizkennlinie parallel nach oben, das heisst, in die Richtung der grösseren Vorlauftemperatur. Eine Erniedrigung des Raumtemperatur-Sollwertes verschiebt die Heizkennlinie parallel nach unten. Auch hier stellt das erfindungsgemässe Verfahren sicher, dass ein Benutzer keine spontanen Fehleinstellungen am Sollwert für eine Raumkomfortgrösse (z.B. Raumtemperatur-Sollwert) vornehmen kann.

Eine weitere vorteilhafte Ausgestaltung der Erfindung liegt darin, dass bei der Überprüfung der Raumkomfortgrösse eine aktuelle Raumtemperatur mitberücksichtigt wird. Die aktuelle Raumtemperatur ist eine wichtige, wenn nicht die entscheidende Komfortgrösse für einen Benutzer. Der Benutzer fühlt sich bei der aktuell herrschenden Raumtemperatur wohl oder nicht wohl. Durch eine einfache Eingabe an einer Bedieneinheit ("Temperatur höher" oder "Temperatur niedriger") kann der Benutzer eine entsprechende Temperaturänderung bewirken, ohne in den Regel- bzw. Steuermechanismus des Systems einzugreifen.

Bei der vorliegenden Erfindung werden die Benutzereingaben hinsichtlich des Bedarfssignals protokolliert und statistisch ausgewertet und Parameter des Gerätes werden basierend auf der statistischen Auswertung verändert. Die Benutzereingaben hinsichtlich des Bedarfssignals können durch einen entsprechenden Zähl- und Speichermechanismus (z.B. log-file) automatisch protokolliert und statistisch ausgewertet werden (z.B. durch ein Spread-Sheet-Programm). Dabei ist es von Vorteil, wenn die Benutzereingaben jeweils mit einem Zeitstempel und der aktuellen Raumtemperatur versehen werden. Optional kann auch die aktuelle Aussentemperatur mit erfasst und bei der Auswertung mitberücksichtigt werden. Basierend auf der statistischen Auswertung können die voreingestellten Parameter (z.B. Eco-Funktionen, Zeitschaltuhren, Raummodell, Sollwerte) des Gerätes bzw. des Gebäudeautomatisierungssystems entsprechend verändert bzw. angepasst werden. Die Veränderung der Parameter des Gerätes (bzw. der Steuerung oder Regelung) kann dabei dauerhaft oder temporär (d.h. für eine bestimmte definierte Zeitspanne) erfolgen. Die Auswertung der protokollierten Daten kann intern im Regler- bzw. Steuersystem (z.B. in einem Mikroprozessor) oder aber auch extern in einer Auswerteeinheit (z.B. ein Computer in einer Leitstelle eines Gebäudeautomatisierungssystems), die mit dem Regler- bzw. Steuersystem über eine entsprechende Schnittstelle (z.B. USB-Schnittstelle, Funkschnittstelle, Ethernet, etc.) verbunden ist, erfolgen. Mit Vorteil wird eine Veränderung der Parameter dem Benutzer als Vorschlag angeboten, den der Benutzer annehmen oder verwerfen kann.

Bei der vorliegenden Erfindung ist eine das Ereignis darstellende Zeitspanne auf Basis der statistischen Auswertung der Benutzereingaben hinsichtlich des Bedarfssignals definiert ist. Basierend auf der statistischen Auswertung kann auch die Zeitspanne für die temporäre Veränderung der aktuellen Zustandsdaten des Gerätes bzw. des Systems entsprechend angepasst (d.h. verkürzt oder verlängert) werden.

Es wird weiterhin eine Bedienungseinrichtung für ein System zum Regeln beziehungsweise Steuern einer Raumkomfortgrösse, insbesondere der Raumtemperatur, beschrieben, die Bedienungseinrichtung umfassend:
- Eingabemittel zur Eingabe eines Bedarfssignals hinsichtlich einer Veränderung der Raumkomfortgrösse für das System zum Regeln beziehungsweise Steuern der Raumkomfortgrösse; wobei durch eine mit dem Eingabemittel wirktechnisch verbundene Steuereinrichtung eine Analyse des Bedarfssignals auf Basis von aktuellen Zustandsdaten des Systems erfolgt, und wobei durch die Steuereinrichtung eine Aktivierung entsprechender Stellgrössen des Systems erfolgt, um die entsprechende Veränderung der Raumkomfortgrösse zu erhalten, wobei die Eingabe des Bedarfssignals nur durch Eingabe einer Veränderungsrichtung hinsichtlich der Raumkomfortgrösse erfolgt, und wobei eine temporäre Veränderung der aktuellen Zustandsdaten des Systems bis zum Eintreffen eines Ereignisses erfolgt. Die erfindungsgemässe Bedienungseinrichtung lässt sich z.B. mit üblichen Standardkomponenten (z.B. Schalter, Drehräder, Displays, etc.) realisieren bzw. lässt sich das erfindungsgemässe Verfahren in handelsüblichen Bedienungseinrichtungen zum Regeln beziehungsweise Steuern einer Raumkomfortgrösse implementieren oder nachrüsten. Das Eingabemittel ist beispielsweise durch Tasten, Schalter, Touchscreen, mobile Geräte (z.B. Smartphone) oder Potentiometer verwirklicht.

Die beschriebene Bedienungseinrichtung umfasst ein Ausgabemittel, zur Ausgabe einer Rückmeldung (Feedback) für den Benutzter von der Eingabe des Bedarfssignals bis zum Eintreffen des Ereignisses. Die Rückmeldung (Feedback) kann z.B. durch das Echo eines Anzeigeelementes, beispielsweise einer Leuchtdiode, erfolgen. Es ist aber auch möglich, dass bei der Aktivierung der temporäre Veränderung der aktuellen Zustandsdaten des Systems bzw. des Gerätes eine Rückmeldung an den Benutzer durch mechanische Mittel erfolgt, z.B. durch Vibration des Eingabemittels bei der Eingabe des Bedarfssignals. Durch die Rückmeldung erhält der Benutzer eine Quittierung bzw. Rückmeldung, dass das Bedarfssignal eingegeben wurde, bzw. der temporäre Override (temporäres Überschreiben der Systemparameter) aktiviert ist. Die Rückmeldung kann auch über eine Textmeldung und/oder eine Visualisierung (z.B. Darstellung als grafisches Symbol) auf der Bedienungseinrichtung (z.B. auf einem Bediendisplay) erfolgen.

Das Eingabemittel ist zur Eingabe eines zweiwertigen Bedarfssignals ausgestaltet. Eingabemittel zur Eingabe eines zweiwertigen Bedarfssignals können sehr leicht realisiert werden. Z.B. durch "Schalter oben", "Schalter unten" (z.B. durch einen Wippschalter). Mit Vorteil weist so ein Wippschalter eine neutrale Stellung auf, von der aus dieser in eine Richtung (z.B. nach "oben" (höhere Temperatur gewünscht) oder z.B. nach "unten" (niedrigere Temperatur gewünscht) bewegt werden kann. Die Eingabe des Bedarfssignals kann auch durch Antippen eines Symbols auf einem Touch-Bildschirm erfolgen, wobei mit Vorteil eine Aktivierung durch eine sog. "Highlighten" (Erhellen) des Symbols angezeigt wird.

Die Bedienungseinrichtung ist geeignet, zur Durchführung eines der oben genannten Verfahren. Das erfindungsgemässe Verfahren lässt sich mit typischen Bedienungseinrichtungen zur Raumkomfortsteuerung bzw. -regelung und entsprechender Hardware (z.B. Heizungssystem, Messfühler, etc.) realisieren.

Es wird weiterhin eine Anordnung zur Steuerung und/oder Regelung einer Komfortgrösse, insbesondere der Temperatur, beschrieben, die Anordnung umfassend:
- eine Vorrichtung zur Veränderung der Komfortgrösse, insbesondere in einem Raum;
- Speichermittel für die Speicherung von Zustandsdaten, Steuerdaten und/oder Regelungsdaten für die Vorrichtung;
- Eingabemittel zur Eingabe eines Bedarfssignals hinsichtlich einer Veränderung der Raumkomfortgrösse;
- eine Steuereinheit zur Steuerung und/oder Regelung der Vorrichtung, wobei durch die Steuereinrichtung eine Analyse des Bedarfssignals auf Basis von aktuellen Zustandsdaten der Vorrichtung erfolgt, und wobei durch die Steuereinrichtung eine Aktivierung entsprechender Stellgrössen der Vorrichtung erfolgt, um die entsprechende Veränderung der Raumkomfortgrösse zu erhalten, wobei das Eingabemittel derart ausgestaltet ist, dass die Eingabe des Bedarfssignals nur durch Eingabe einer Veränderungsrichtung hinsichtlich der Raumkomfortgrösse erfolgt, und wobei eine temporäre Veränderung der aktuellen Zustandsdaten der Vorrichtung bis zum Eintreffen eines Ereignisses erfolgt. Die Gerätschaften für eine solche Anordnung sind typische Komponenten bei der Steuerung bzw. Regelung von HLK-Systemen. Das erfindungsgemässe Verfahren lässt sich mit diesen Komponenten realisieren bzw. in einer vorhandenen Anordnung zur Steuerung und/oder Regelung einer Komfortgrösse nachrüsten.

Die Anordnung umfasst Mittel zur Durchführung eines der oben genannten Verfahren. Wie schon oben erwähnt, lässt sich das erfindungsgemässe Verfahren mit typischen Komponenten, wie sie bei der Steuerung bzw. Regelung von HLK-Systemen bekannt und erhältlich sind, realisieren bzw. in einer vorhandenen Anordnung zur Steuerung und/oder Regelung einer Komfortgrösse nachrüsten.

Ein Ausführungsbeispiel der Erfindung ist in der Zeichnung dargestellt und wird im Folgenden erläutert.

Dabei zeigen:
- FIG 1: eine beispielhafte Prinzipdarstellung für die vorliegende Erfindung als Funktionsmodell,
- FIG 2: eine beispielhafte Anordnung für die vorliegende Erfindung als Blockdiagramm,
- FIG 3: einen ersten beispielhaften Use Case für die vorliegende Erfindung dargestellt als Übersichtsdiagramm,
- FIG 4: ein beispielhaftes Flussdiagramm für ein Verfahren mit beispielhaften Analyseschritten A1 bis A3 zur Durchführung der vorliegenden Erfindung,
- FIG 5: den Analyseschritt A1 für die vorliegende Erfindung dargestellt als erstes beispielhaftes Zustandsübergangsdiagramm,
- FIG 6: den Analyseschritt A1 für die vorliegende Erfindung dargestellt als zweites beispielhaftes Zustandsübergangsdiagramm,
- FIG 7: den Analyseschritt A2 für die vorliegende Erfindung dargestellt als drittes beispielhaftes Zustandsübergangsdiagramm in Verbindung mit einem zugehörigen Schaltprogramm, und
- FIG 8: den Analyseschritt A3 für die vorliegende Erfindung dargestellt als viertes beispielhaftes Zustandsübergangsdiagramm.

In heutigen Systemen für die Gebäudeautomatisierung (z.B. Heizungs- oder Klimasysteme) muss der Benutzer, um eine Verstellung richtig (d.h. ohne Fehleingaben oder unerwünschte Parameterverstellung im System) zu machen, das Modell der Regelung verstehen, die Ursache analysieren, die richtigen Schlüsse ziehen und danach eine richtige (d.h. fehlerfreie Eingabe) vornehmen.

Beispiel: Ist es dem Benutzer zu kühl, müsste er zuerst verstehen in welchem Zustand sich das System befindet. Danach kann er entscheiden, ob z.B. die Betriebsart angepasst oder der Temperatursollwert höher gestellt werden muss. Die meisten Benutzer sind mit dieser Aufgabe überfordert was dazu führt, dass Fehlmanipulationen gemacht werden. Dies wiederum führt zu "verstellten Anlagen". Der Kunde ist unzufrieden, da der Komfort im Raum nicht optimal ist und gleichzeitig ist die Wahrscheinlichkeit gross, dass das System nicht energieoptimal betrieben wird.

Die vorliegende Erfindung nimmt dem Kunden diese Analyse ab. Meldet Nutzer ein Bedürfnis an, analysiert das System selbständig, was die Ursache für das Unbehagen des Nutzers ist und leitet die notwendigen Schlüsse daraus ab. Auf einen Benutzereingriff reagiert das System sofort und selbständig mit einem temporären Überschreiben (Override) von aktuellen Einstellparametern des Systems (z.B. Override von Eco-Funktionen). Das temporäre Überschreiben der Einstellparameter kann für eine definierte Zeitspanne (z.B. 30 Minuten oder 1h) oder bis zur nächsten Bedieneingabe erfolgen. Das temporäre Überschreiben der Einstellparameter kann aber auch bis zum Eingang eines externen Signals (z.B. von einer Alarmanlage oder eines Präsenzmelders) oder bis zum Schaltpunkt eines Zeitschaltprogramms andauern.

Dank dieser Funktion wird ein hohes Mass an Automatisierung der Regelung bzw. Steuerung erreicht. Der Benutzer wird vor spontanen Fehleinstellungen bewahrt. Dies resultiert in einem höheren Komfort für den Benutzer und in einem geringeren Energieverbrauch.

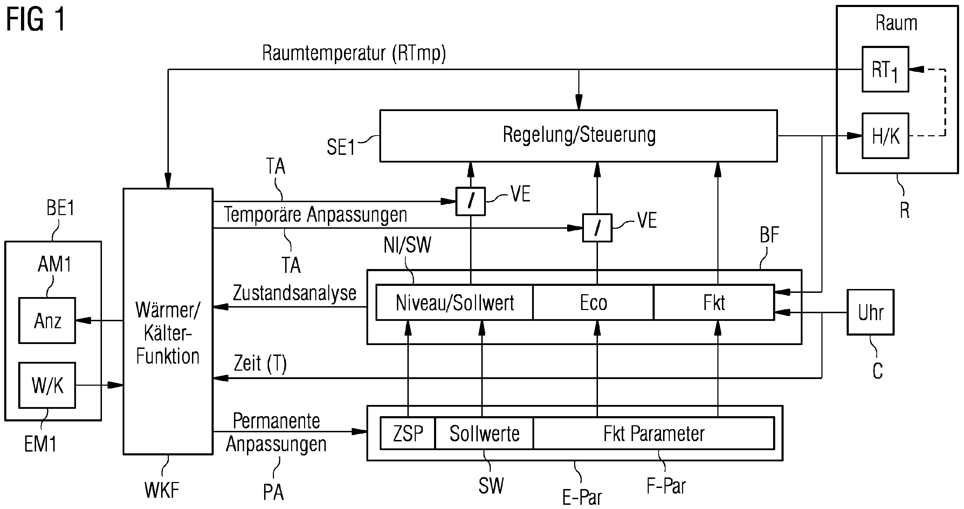

Figur 1 zeigt eine beispielhafte Prinzipdarstellung für die vorliegende Erfindung als Funktionsmodell. Die vorliegende Erfindung kann prinzipiell zur Steuerung bzw. Regelung von beliebigen Raumkomfortgrössen (Temperatur, Luftfeuchtigkeit, etc.) verwendet werden. Die Funktionsweise der vorliegenden Erfindung wird beispielhaft, aber nicht einschränkend zur Steuerung bzw. Regelung der Raumkomfortgrösse Temperatur dargestellt und erläutert.

In der Darstellung gemäss Figur 1 erfolgt die Eingabe eines Bedarfssignals hinsichtlich einer Veränderung der Raumkomfortgrösse (z.B. Raumtemperatur) durch einen Benutzer an einer Bedienungseinrichtung BE1 (z.B. ein Raumgerät). Die Bedienungseinrichtung BE1 umfasst Eingabemittel EM1 (z.B. einen Wippschalter, um eine Temperaturerhöhung oder eine Temperaturabsenkung im Raum R zu bewirken. Der Raum R umfasst bei Bedarf einen optionalen Raumtemperaturfühler RT1 sowie Stellglieder H/K, um eine Heizung bzw. Kühlung im Raum R zu bewerkstelligen. Mit Vorteil umfasst die Bedienungseinrichtung BE1 ein Ausgabemittel AM1 zur Ausgabe einer Rückmeldung (Feedback) an den Benutzer bezüglich der Aktivierung bzw. Deaktivierung der Wärmer/Kälter-Funktion WKF.

Eine Regelung bzw. Steuerung für ein HLK-System umfasst permanente bzw. selten veränderte Grundeinstellwerte E-Par zu den Regel- bzw. Steuerfunktionen für das HLK-System. Diese Grundeinstellwerte basieren auf den Anforderungen und Gegebenheiten für das jeweilige Gebäude (z.B. Sonnen- oder Schattenlage) sowie den Bedürfnissen der Benutzer und werden üblicherweise bei der Inbetriebsetzung des HLK-Systems eingestellt. Die Grundeinstellwerte E-Par umfassen z.B. ein eingestelltes Zeitschaltprogramm ZSP (üblicherweise in Abhängigkeit von der Raumbelegung; z.B. Bürostunden), eingestellte Sollwerte SW, pro Niveau (Komfort, Precomfort, Reduziert, Schutzbetrieb), jeweils für Heizen und Kühlen, sowie Funktionsparameter F-Par, d.h. den Einstellwerten zu den Regel - bzw. Steuerfunktionen zum Betrieb der Steuereinheit SE1.

Die Grundeinstellwerte E-Par bestimmen den Betrieb und die Arbeitsweise der Betriebsfunktionen BF zum operativen Betrieb der Steuereinheit SE1.

Die Betriebsfunktionen BF umfassen:
- den Niveau/Sollwert NI/SW. Der Niveau/Sollwert NI/SW bildet aufgrund der Uhrzeit C und dem Schaltprogramm für die Steuereinheit SE1 das aktuelle Schaltuhrniveau und den entsprechenden Sollwert für Heiz- oder Kühlbetrieb;
- Eco-Funktionen Eco. Eco-Funktionen Eco versetzen die HLK-Anlage automatisch in einen ökonomischen Betriebszustand (z.B. Abschalten oder Aktivieren der Heizung zu saisonalen Übergangszeiten);
- Regel/Steuerfunktionen Fkt (z.B. hinterlegte Heizkurve).

Die Wärmer/Kälter-Funktion WKF analysiert den aktuellen Betriebszustand BF (inkl. Raumtemperatur RTmp) und nimmt aufgrund der Eingaberichtung (wärmer/kälter) eine temporäre Anpassung TA der Funktionswerte in der Steuerung/Regelung SE1 vor. Nach Ablauf einer gewissen Zeit, werden wieder die aktuellen Funktionswerte BF der Betriebsfunktionen (Niveau/Sollwert NI/SW; Eco-Funktionen Eco; Fkt (z.B. hinterlegte Heizkurve) wirksam. Die Wärmer/Kälter-Funktion stellt u.a. sicher, dass keine ungewollte Fehlmanipulation an den Grundeinstellwerten E-Par erfolgt.

Die Wärmer/Kälter-Funktion kann optional neben der Richtung (w/k d.h. wärmer/kälter) auch den Zeitpunkt und die Häufigkeit der Eingaben protokollieren, analysieren und statistisch auswerten. Daraus können automatisch permanent wirkende Anpassungen PA an den Einstellwerten E-Par vorgenommen werden. Optional kann dies auch für Funktionen, welche nicht temporär beeinflusst werden (z.B. Steilheit der Heizkurve) erfolgen.

Mit Vorteil ist das Eingabemittel EM1 zur Eingabe eines zweiwertigen Bedarfssignals (wärmer / kälter) ausgestaltet. Der Benutzer kann somit z.B. durch das einfache Betätigen eines Wippschalters in eine bestimmte Richtung eine wärmere bzw. kältere Temperatur im Raum R veranlassen. Das Eingabemittel kann z.B. auch durch Tasten, Schalter, Touchscreen, mobile Geräte (z.B. Smartphone) oder Potentiometer verwirklicht werden.

Die temporäre Veränderung TA der aktuellen Zustandsdaten der Regelung/Steuerung SE1 erfolgt bis zum Eintreffen eines Ereignisses. Bei einem Ereignis kann es sich um den Ablauf einer Zeitspanne handeln oder um eine weitere Benutzereingabe an der Bedieneinheit BE1.

Die Darstellung gemäss Figur 1 zeigt u.a. folgende Elemente:

### Raum

- RT1:: Raumtemperatur (Fühler)
- H/K:: Heizung/Kühlung (Stellglied)

### Funktionen

- Uhr:: Echtzeituhr mit Datum, Wochentag und Uhrzeit
- Fkt:: Regel/Steuerfunktionen (z.B. Heizkurve)
- Eco:: Eco-Funktionen, welche die Anlage automatisch in einen ökonomischen Betriebszustand versetzen (in der Regel ausschalten).
- Niveau/Sollwert (NI/SW):: Bildet aufgrund der Uhrzeit und dem Schaltprogramm das aktuelle Schaltuhrniveau und den entsprechenden Sollwert für Heiz- oder Kühlbetrieb.

### Parameter

Fkt Parameter: Einstellwerte zu den Funktionen
- Sollwerte:: Eingestellte Sollwerte, pro Niveau (Komfort, Precomfort, Reduziert, Schutzbetrieb), jeweils für Heizen und Kühlen.
- ZSP:: Eingestelltes Zeitschaltprogramm (Raumbelegung)

### Wärmer/Kälter-Funktion

- W/K:: Eingabeelement Wärmer/Kälter
- Anz:: Anzeigeelement für Betriebszustand der Wärmer/Kälter-Funktion
- VE:: Virtuelles Element, das den aktuellen Zustand der Steuerung bzw. der Regelung auf den temporären Zustand umschaltet und dadurch den temporären "Override" (d.h. das Überschreiben der aktuellen Funktionswerte) bewirkt.

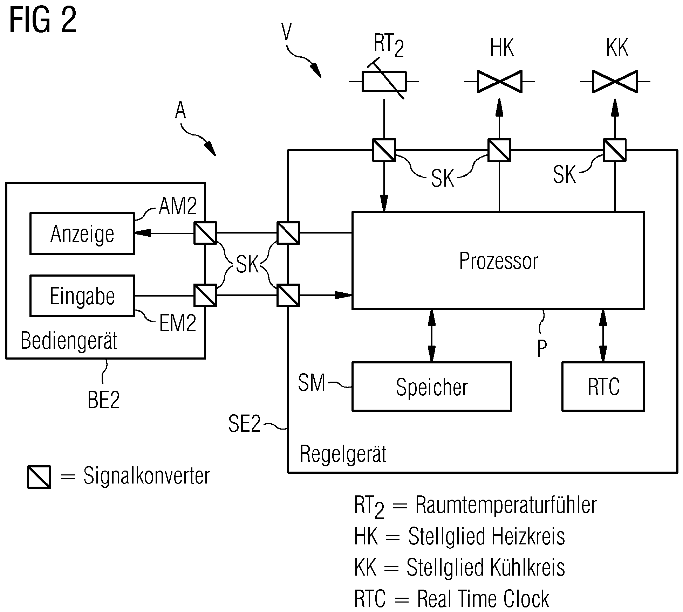

Figur 2 zeigt eine beispielhafte Anordnung A als Blockdiagramm, insbesondere geeignet für die Realisierung der vorliegenden Erfindung. Die Anordnung A zur Steuerung und/oder Regelung einer Komfortgrösse, insbesondere der Temperatur, umfasst:
- eine Vorrichtung V zur Veränderung der Komfortgrösse (z.B. Temperatur), in einem Raum (R; siehe FIG 1);
- Speichermittel SM für die Speicherung von Zustandsdaten, Steuerdaten und/oder Regelungsdaten für die Vorrichtung V;
- Eingabemittel EM2 zur Eingabe eines Bedarfssignals hinsichtlich einer Veränderung der Raumkomfortgrösse (z.B. kühlere oder wärmere Raumtemperatur);
- eine Steuereinheit SE2 (z.B. Regelgerät mit Prozessor P) zur Steuerung und/oder Regelung der Vorrichtung V, wobei durch die Steuereinrichtung SE2 eine Analyse des Bedarfssignals auf Basis von aktuellen Zustandsdaten der Vorrichtung erfolgt, und wobei durch die Steuereinrichtung SE2 eine Aktivierung entsprechender Stellgrössen (z.B. Stellglied Heizkreis HK oder Stellglied Kühlkreis KK) der Vorrichtung V erfolgt, um die entsprechende Veränderung der Raumkomfortgrösse zu erhalten, wobei das Eingabemittel EM2 derart ausgestaltet ist, dass die Eingabe des Bedarfssignals nur durch eine Eingabe einer Veränderungsrichtung hinsichtlich der Raumkomfortgrösse erfolgt, und wobei eine temporäre Veränderung der aktuellen Zustandsdaten der Vorrichtung V bis zum Eintreffen eines Ereignisses (z.B. Ablauf einer definierten Zeitspanne oder weitere Benutzereingabe am Eingabemittel EM2) erfolgt. Die Zeitspanne kann z.B. bei der Inbetriebnahme des HLK-Systems als Einstellparameter hinterlegt werden (z.B. 30 Minuten) .

Die Zeitspanne kann aber auch auf Basis von statistischen Auswertungen der Benutzereingaben hinsichtlich des Bedarfssignals (z.B. Wunsch nach einer wärmeren oder kühleren Raumtemperatur) definiert werden. Z.B. können während einer Beobachtungsphase (z.B. 3 Monate) nach der Inbetriebnahme des Systems die Benutzereingaben protokolliert und analysiert werden und daraus eine angemessene Zeitspanne abgeleitet werden. Bei der Beobachtungsphase kann es sich aber auch um ein wanderndes Beobachtungsfenster handeln, wobei kontinuierlich die Benutzereingaben protokolliert und analysiert werden und bei Bedarf die Zeitspanne verändert wird. Über eine Echtzeituhr RTC (Real Time Clock) können die Benutzereingaben mit einem Zeitstempel versehen protokolliert werden. Die Protokollierung, Auswertung und Analyse erfolgt mit Vorteil auf dem Prozessor P (z.B. ein Mikroprozessor) mit einer geeigneten Software.

Die Zeitspanne definiert den Zeitraum, in welchem eine temporäre Anpassung (TA; siehe FIG 1) der Steuerungsparameter erfolgt, um den Benutzerwunsch ("wärmer" oder "kühler") effektiv und ohne weitere Anforderungen an den Benutzer zu erfüllen. Während der Zeitspanne erfolgt somit eine temporäre Überschreibung (temporärer Override) der aktuellen Steuerungsparameter der Steuereinheit SE2. Nach Ablauf der Zeitspanne erfolgt die weitere Steuerung bzw. Regelung des Systems wieder auf Basis der aktuell hinterlegten Parameter (NI/SW; Eco; Fkt; siehe FIG 1) für die Betriebsfunktion (BF; siehe FIG 1) der Steuereinheit SE2.

Der Benutzer gibt an der Bedieneinheit BE2 lediglich ein, ob er eine wärmere oder kältere Umgebungstemperatur wünscht. Das Reglersystem SE2 wirkt aufgrund des Betriebszustandes selbständig auf die relevanten Stellgrössen ein (deaktivieren der ECO Automatik, Ändern des Betriebsniveaus oder Verstellen des Temperatursollwertes). Der Benutzer muss somit nicht selbständig eine Analyse der Betriebsart, des Betriebsniveaus (bestimmt durch Zeitschaltprogramm oder Eco-Automatik) und des Temperatursollwerts durchführen, um zu bestimmen, auf welche der genannten Grössen er einzuwirken hat um eine gewünschte Temperaturänderung zu bewirken.

Der Benutzer gibt lediglich an, ob er wärmer oder kälter will. Das System analysiert für den Benutzer, auf welche Parameter einzuwirken ist und nimmt die temporäre Anpassung (Override) vor.

Die Interaktion mit dem System wird für den Benutzer einfacher und verständlicher, Fehlmanipulationen wird vorgebeugt, weiterhin können Energieeinsparungen erzielt werden.

Mit Vorteil wird für die Analyse und Auswertung der Benutzereingaben auch die aktuelle Raumtemperatur mitverwendet, die der Prozessor P über einen Raumtemperaturfühler RT2 erhält.

Mit Vorteil umfasst die Bedienungseinrichtung BE2 ein Ausgabemittel AM2 zur Ausgabe eines Feedbacks (Rückmeldung) für den Benutzter von der Eingabe des Bedarfssignals bis zum Eintreffen des Ereignisses. Das Feedback kann z.B. in der Aktivierung einer LED liegen. Leuchtet die LED, weiss der Benutzer, dass sich die Steuereinheit SE2 im Zustand eins temporären "Overrides" befindet. Das Feedback kann aber auch durch eine entsprechende textuelle und/oder grafische Visualisierung an der Bedienungseinrichtung BE2 erfolgen.

In der Darstellung gemäss Figur 2 sind für die Anordnung A weiterhin übliche Signalkonverter SK (z.B. Analog/DigitalWandler) dargestellt.

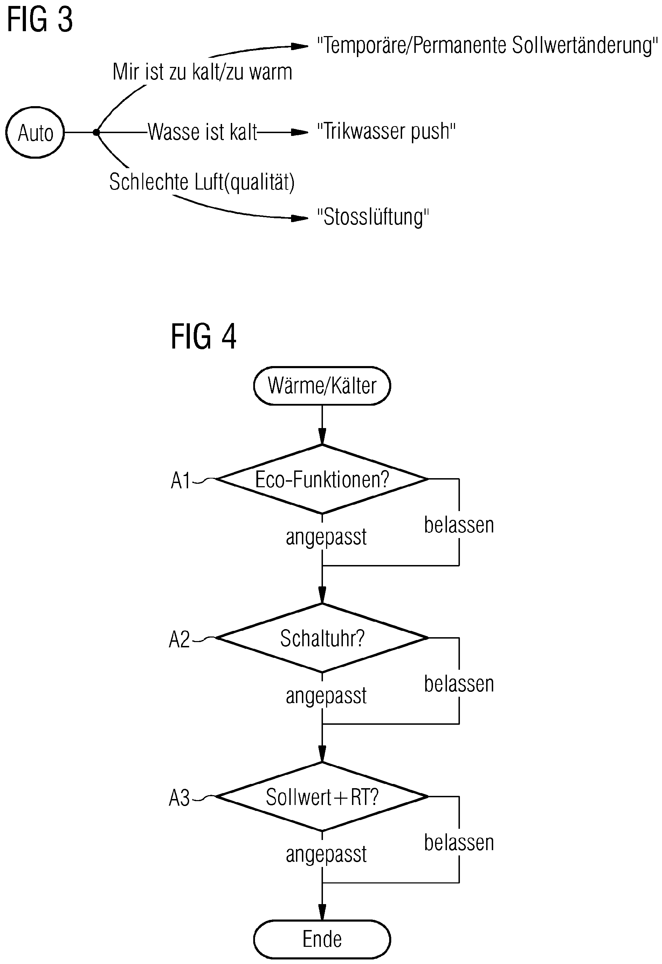

Figur 3 zeigt einen ersten beispielhaften Use Case für die vorliegende Erfindung dargestellt als Übersichtsdiagramm. Ein HLK-System läuft üblicherweise ganzjährig vollautomatisch in einem Automatikbetrieb "Auto", erfüllt den Komfortanspruch und garantiert ökologischen und ökonomischen Betrieb des Systems. Basis für den Automatikbetrieb "Auto" sind u.a. programmierte Gebäude- und Anlagenkennwerte, Sollwerte und Belegungszeiten (Schaltuhren). Die dem Automatikbetrieb "Auto" hinterlegte Programmierung deckt sich aber nicht immer mit den aktuellen Bedürfnissen und Empfindungen eines Benutzers (Enduser). Besteht spontan ein Defizit, stehen dem Enduser heute u.a. folgende Bedienfunktionen zur Verfügung:

### Mir ist zu warm/zu kalt

Temporäre/Permanente Sollwertänderung → Der Raumtemperatursollwert wird nach unten oder oben verstellt. Die Verstellung bleibt für eine voreingestellte Dauer oder immer bestehen (Temporär/Permanent sind dabei Funktionsvarianten).

### Das Wasser ist kalt (Duschen/Abwaschen)

Trinkwasser Push → Auslösen einer Nachladung des Trinkwasserpeichers.

### Schlechte Luft(qualität) (Die Luft riecht schlecht, Dampf beim Kochen)

Stosslüftung → Betrieb auf hoher Ventilationsstufe für eine voreingestellte Dauer.

### Dabei besteht folgende Problematik:

Im Gegensatz zum Trinkwasser-Push und zur Stosslüftung, wo mit einer einfachen Massnahme der Mangel eigentlich behoben werden sollte, ist dies bei der Heizung/Kühlung mit der heute üblichen Sollwertkorrektur nicht unbedingt der Fall.

Eine Anpassung des Sollwertes führt nicht immer zu einer Reaktion des Systems, da der Grund für zu warme oder zu kalte Raumtemperatur auch eine aktive Eco-Funktion oder ein unpassendes Zeitschaltprogramm sein kann.

Der Enduser muss eigentlich selber herausfinden (d.h. analysieren), wo genau das Problem liegt und daraus die geeignete Massnahme wählen, welche zur gewünschten Wirkung führt. Damit ist ein Enduser oft überfordert. Weiterhin besteht die Gefahr von Fehlmanipulationen (z.B. Verstellen) an Parametern der Steuerung bzw. Regelung des HLK-Systems.

Figur 4 zeigt ein beispielhaftes Flussdiagramm für ein Verfahren mit beispielhaften Analyseschritten A1 bis A3 zur Durchführung der vorliegenden Erfindung. Die Abfolge der Analyseschritte A1 bis A3 ist exemplarisch dargestellt und stellt keine Einschränkung dar. Die Abfolge der Analyseschritte A1 bis A3 kann auch in einer anderen Reihenfolge erfolgen. Weiterhin müssen nicht notwendigerweise alle angegebenen Analyseschritte durchgeführt werden. Auch können optional weitere zusätzliche Analyseschritte durchgeführt werden.

Dem Enduser wird eine Funktion gegeben, bei welcher er nur das Bedürfnis "Wärmer/Kälter" eingibt. Die Steuerung überprüft zum Zeitpunkt der Eingabe den aktuellen Betriebszustand und verändert die Betriebswerte so, dass sicher eine Reaktion des Systems erfolgt, welche das Defizit im Sinn der Eingabe behebt.

Die Funktion ("Wärmer/Kälter") analysiert beispielhaft für die Veränderung der Raumtemperatur folgende Betriebszustände der Steuerung bzw. Regelung des zugrundeliegenden HLK-Systems:

### Analyseschritt A1

Sind Eco-Funktionen aktiv (Heizung/Kühlung ausgeschaltet)?
- Sommer/Winterumschaltung Heizung bzw. Kühlung
- Aussentemperaturgrenze Kühlung
- Sperrzeiten Heiz-/Kühlbetrieb
- Tagesheizgrenze/Tageskühlgrenze

### Analyseschritt A2

Stimmt das Niveau des Zeitschaltprogramms?

### Analyseschritt A3

Soll der Sollwert (z.B. Raumtemperatursollwert) angepasst werden?

Ist ein Raumtemperaturfühler vorhanden, berücksichtigt die Funktion ("Wärmer/Kälter) zum Zeitpunkt der Eingabe bei der Analyse mit Vorteil auch den Wert der Raumtemperatur RT. Aufgrund der Differenz zum Zielwert (Sollwert) kann die Massnahme anders gewählt oder gewichtet werden.

In einer vorteilhaften Ausgestaltung der Erfindung wirkt die Wärmer/Kälter-Korrektur nur temporär d.h. nach einer bestimmten Dauer (definierte Zeitspanne) gelten wieder die programmierten Betriebswerte für die Steuerung bzw. Regelung des HLK-Systems.

In einer weiteren vorteilhaften Ausgestaltung der Erfindung wird nebst dem Eingriffs-Zeitpunkt auch die Eingriffs-Häufigkeit analysieren. Damit können permanent wirkende Anpassungen (PA; siehe FIG 1) oder regeltechnisch "tiefere" Korrekturen durchgeführt werden. Z.B. Ändern der Heizkurve oder der Parameter des Zeitschaltprogramms (ZSP; siehe FIG 1) .

Prinzipiell ist das in Figur 4 beschriebene Verfahren für unterschiedliche Raumkomfortgrössen anwendbar und nicht auf die Raumtemperatur beschränkt.

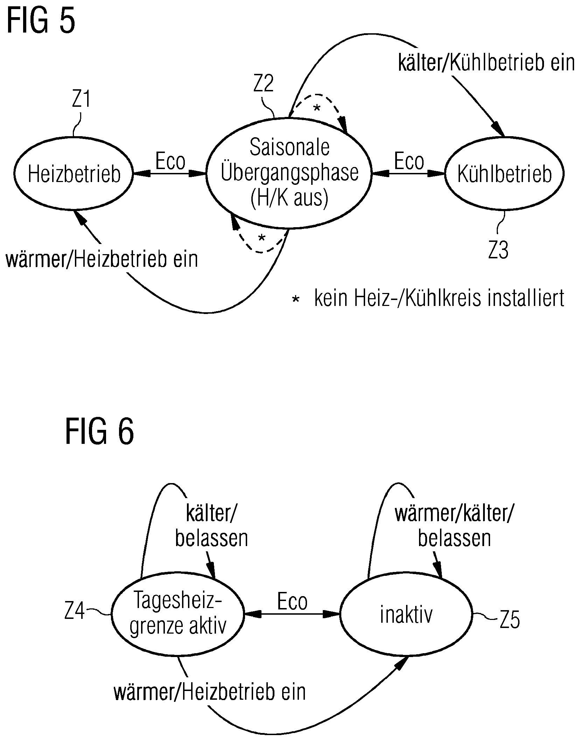

Mit Vorteil erfolgt die Ablaufreihenfolge der Analyseschritte A1 bis A3 in der gemäss Figur dargestellten Reihenfolge. Bei Bedarf kann optional ein Analyseschritt weggelassen werden. Figur 5 zeigt den Analyseschritt A1 (Überprüfen der Eco-Funktion; siehe FIG 4)) für die vorliegende Erfindung dargestellt als erstes beispielhaftes Zustandsübergangsdiagramm. Im dargestellten Szenario gemäss Figur 5 ist die automatische Sommer/Winter-Umschaltung der Heizung aktiv oder die Aussentemperaturgrenze der Kühlung ist noch nicht überschritten bzw. Sperrzeiten (Heiz-/Kühlwechsel) sind aktiv (Zustand Z2).

Je nach Eingaberichtung des Bedieners ("wärmer" oder "kühler") wird die entsprechende Eco-Funktion ausgeschaltet und somit der gewünschte Betriebszustand (Heizbetrieb Z1 bzw. Kühlbetrieb Z3) erzwungen. Bei einer "Kälter"-Anforderung wird bezüglich der Eco-Funktion in den Zustand Kühlbetrieb Z3 gewechselt und der Kühlbetrieb wird aktiviert. Bei einer "Wärmer"-Anforderung wird bezüglich der Eco-Funktion in den Zustand Heizbetrieb Z1 gewechselt und der Heizbetrieb wird aktiviert. Die Wirkung dauert bis zum Ablauf eines bestimmten Zeitintervalls. Danach wird die Eco-Funktion wieder aktiv (d.h. Wechsel in den Zustand Z2 "Saisonale Übergangsphase").

Figur 6 zeigt den Analyseschritt A1 (Überprüfen der Eco-Funktion) für die vorliegende Erfindung dargestellt als zweites beispielhaftes Zustandsübergangsdiagramm. Das Szenario gemäss Figur 6 betrifft eine Eco-Funktion bezüglich einer Tagesheizgrenze mit den Zuständen Z4 ("Tagesheizgrenze aktiv", d.h. die Heizung ist aus) und Z5 ("Tagesheizgrenze inaktiv", d.h. die Heizung ist an). Ist im Steuerungs- bzw. Regelungssystem die Tagesheizgrenze inaktiv (Zustand Z5) und der Benutzer macht eine "Wärmer- oder eine Kälteranforderung", dann bleibt das Steuerungs- bzw. Regelungssystem bezüglich der Eco-Funktion im Zustand Z5 "Tagesheizgrenze inaktiv". Ist im Steuerungs- bzw. Regelungssystem die Tagesheizgrenze aktiv (Zustand Z4) und der Benutzer macht eine "Kälteranforderung", dann bleibt das Steuerungs- bzw. Regelungssystem bezüglich der Eco-Funktion im Zustand Z4. Macht der Benutzer aber im Zustand Z4 "Tagesheizgrenze aktiv" eine "Wärmeranforderung", dann erfolgt ein Wechsel bezüglich der Eco-Funktion in den Zustand Z5 "Tagesheizgrenze inaktiv" und der Heizbetrieb wird aktiviert. Die Wirkung dauert bis zum Ablauf eines bestimmten Zeitintervalls. Danach wird die entsprechende Eco-Funktion wieder aktiv.

Das in Figur 6 dargestellte Zustandsdiagramm gilt analog auch für die Tageskühlgrenze.

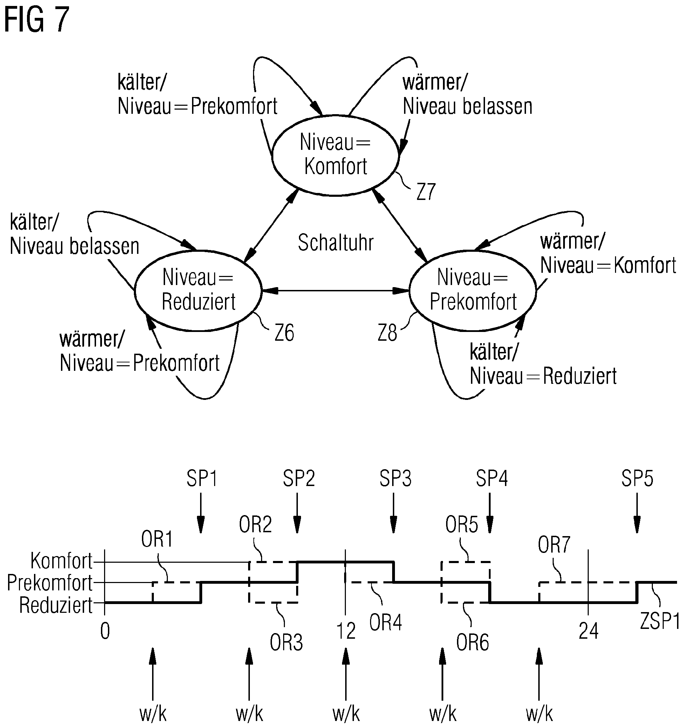

Figur 7 zeigt den Analyseschritt A2 (Überprüfung Zeitschaltprogramm ZSP1, (ZSP; siehe FIG 1)) für die vorliegende Erfindung dargestellt als drittes beispielhaftes Zustandsübergangsdiagramm (oberer Abschnitt von Figur 7) in Verbindung mit einem zugehörigen Schaltprogramm (unterer Abschnitt von Figur 7). Figur 7 zeigt beispielhaft für den Heizbetrieb drei Niveau-Zustände für ein Zeitschaltprogramm ZSP1: "Reduziert" (Zustand Z6), "Komfort" (Zustand Z7), "Prekomfort" (Zustand Z8) .

Kann das Schaltuhrniveau des Zeitschaltprogramms ZSP1 (Reduziert (Z6), Prekomfort (Z8), Komfort (Z7)) in die eingegebene Richtung (wärmer/kälter) verändert werden, wird es angepasst. Ist das höchste oder tiefste Niveau schon gesetzt, wird das Schaltuhrniveau belassen.

Das im unteren Abschnitt von Figur 7 dargestellte Verlaufsdiagramm bzw. Schaltdiagramm zeigt in der Abszisse die Zeit (0h, 12h, 24h), Schaltpunkte SP1 bis SP5 für ein Zeitschaltprogramm ZSP1 und Bedieneingaben w/k (Wärmer- bzw. Kälteranforderung).

In der Ordinate des Verlaufsdiagramms sind die entsprechenden Zustände (Reduziert, Prekomfort, Komfort), d.h. die Schaltuhrniveaus des Zeitschaltprogramms ZSP1 dargestellt. In diesen Schaltuhrniveaus kann sich das beispielhafte Zeitschaltprogramm ZSP1 befinden.

Durch eine Bedieneingabe w/k (Wärmer- bzw. Kälteranforderung) des Benutzers wird das aktuelle Schaltuhrniveau des Zeitschaltprogramms ZSP1 (in Figur 7 mit einer fetten Linie dargestellt) verlassen und geht temporär in einen Overridemodus OR1 bis OR7 (in Figur 7 jeweils mit einer gestrichelten Linie dargestellt).

Der Overridemodus OR1 bis OR7, d.h. die Änderung des Schaltuhrniveaus dauert bis zum nächsten Schaltpunkt SP1 bis SP5 des Zeitschaltprogramms ZSP1 bzw. bis zum Ablauf eines bestimmten Zeitintervalls.

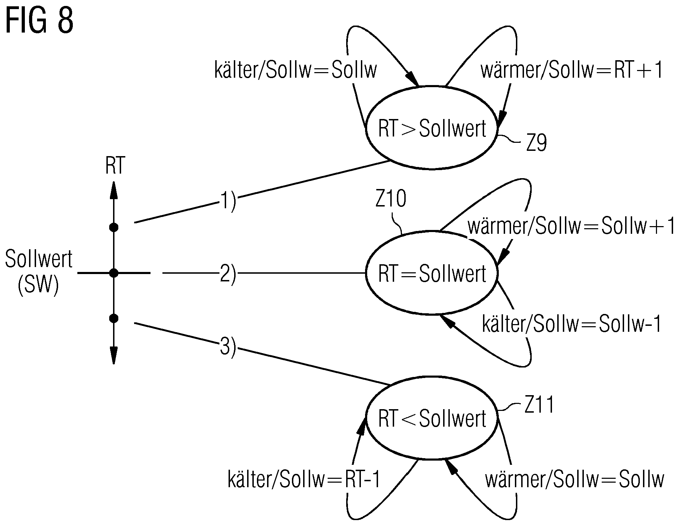

Figur 8 zeigt den Analyseschritt A3 (Überprüfen Sollwerte, optional unter Berücksichtigung der aktuellen Raumtemperatur RT) für die vorliegende Erfindung dargestellt als viertes beispielhaftes Zustandsübergangsdiagramm. Im beispielhaften Szenario gemäss Figur 8 befindet sich das HLK-System im Heizbetrieb, alle Eco-Funktionen sind deaktiviert. Das Schaltuhrniveau entspricht der eingegebenen Richtung (evtl. vorgängig angepasst; siehe Beschreibung zu Figur 7). Das Szenario gemäss Figur 8 stellt eine Eskalierung des Szenarios gemäss Figur 7 dar und berücksichtigt zusätzlich den Raumtemperatursollwert. Erst jetzt wird der Raumtemperatursollwert erhöht oder gesenkt. Dafür wird zum Zeitpunkt der Eingabe auch die aktuelle Raumtemperatur (RT) betrachtet bzw. deren Differenz zum aktuellen Sollwert. Im Zustand Z9 ist die Raumtemperatur (RT) > Sollwert; im Zustand Z10 ist die Raumtemperatur (RT) = Sollwert; im Zustand Z11 ist die Raumtemperatur (RT) < Sollwert.

Je nach dem wird die Korrektur anders gewichtet, damit einerseits eine Reaktion des Systems erfolgt und andererseits auch das augenblickliche Behaglichkeitsempfinden des Benutzers berücksichtigt wird.
1) Liegt die Raumtemperatur RT oberhalb des Sollwertes (d.h. RT > Sollwert (Zustand Z9)) wird bei "wärmer" der Sollwert auf das Raumtemperaturniveau angehoben und zusätzlich um einen bestimmten Betrag (z.B. 1°K) erhöht. Wird "kälter" verlangt wird der Sollwert (SW) belassen.
2) Entspricht die Raumtemperatur RT dem Sollwerte (± kleine Schaltdifferenz) (d.h. RT = Sollwert (Zustand Z10)) wird der Sollwert (SW) je nach dem um einen bestimmten Betrag (z.B. 1°K) erhöht oder gesenkt.
3) Liegt die Raumtemperatur RT unterhalb des Sollwertes SW (d.h. RT < Sollwert (Zustand Z11)) wird bei "kälter" der Sollwert auf das Raumtemperaturniveau abgesenkt und zusätzlich um einen bestimmten Betrag (z.B. 1°K) reduziert. Wird "wärmer" verlangt wird der Sollwert belassen.

Ist keine Raumtemperatur RT verfügbar (da z.B. kein Raumfühler vorhanden), wird der Sollwert SW immer um einen konstanten Betrag (z.B. 1°K) korrigiert, dies aber nur, wenn vorgängig das Schaltuhrniveau nicht umgeschaltet werden konnte.

Die Korrektur des Sollwertes SW dauert z.B. bis zum nächsten Schaltpunkt, sofern ein Niveauwechsel stattfindet. Findet beim nächsten Schaltpunkt kein Niveauwechsel statt, weil das Schaltuhrniveau aufgrund der Eingabe auf das gleiche Niveau angepasst wurde, welches in der nächsten Phase folgt, dauert die Korrektur (d.h. der temporäre Override) bis zum übernächsten Schaltpunkt oder bis zum Ablauf eines definierten Zeitintervalls.

Die vorliegende Erfindung bietet insbesondere folgende Vorteile für einen Bediener:
In der Betriebsart Automatik eines HLK-Systems werden die Betriebsniveaus (Reduziert/ Komfort / Pre-Komfort) mit den dazugehörigen jeweiligen Sollwerten üblicherweise per Zeitschaltprogramm aktiviert. Hat der Benutzer ein Komfortbedürfnis das von den programmierten Einstellungen abweicht, kann er eine temporäre Korrektur bewirken. Der Benutzer hat die Möglichkeit die Betriebsart durch ein einfaches Schalten (z.B. "wärmer" bzw. "kälter"), d.h. durch einen Trigger temporär zu verändern, ohne vorherige Analyse auf welchen Parameter der Steuerung bzw. Regelung er einzuwirken hat. Diese Analyse, die aktuell von dem Benutzer gemacht werden müsste, erfolgt erfindungsgemäss durch ein automatisches Verfahren. Der Benutzer gibt lediglich an, ob er wärmer oder kälter will. Das System analysiert für den Benutzer, auf welche Parameter einzuwirken ist und nimmt die temporäre Anpassung vor.

Verfahren, Bedienungseinrichtung und Anordnung zur Steuerung bzw. Regelung mindestens einer Raumkomfortgrösse, insbesondere der Raumtemperatur, in einem Gebäude, wobei durch einen Benutzer eine Eingabe eines Bedarfssignals hinsichtlich einer Veränderung der Raumkomfortgrösse durchgeführt wird, wobei die Eingabe durch den Benutzer an einer Bedienungseinrichtung für ein System zum Regeln beziehungsweise Steuern der Raumkomfortgrösse erfolgt; wobei eine Analyse des Bedarfssignals auf Basis von aktuellen Zustandsdaten des Systems und eine Aktivierung entsprechender Stellgrössen des Systems durch eine Steuereinrichtung erfolgt, um die entsprechende Veränderung der Raumkomfortgrösse zu erhalten, wobei die Eingabe des Bedarfssignals nur durch eine Eingabe einer Veränderungsrichtung hinsichtlich der Raumkomfortgrösse erfolgt, und wobei eine temporäre Veränderung der aktuellen Zustandsdaten des Systems bis zum Eintreffen eines Ereignisses erfolgt. Das Ereignis kann im Ablauf einer Zeitspanne liegen oder im Eintreffen eines Signals liegen. Beim Signal kann es sich z.B. um ein externes Signal handeln (z.B. ein Signal eines Messwertfühlers; ein Schalterwert, der über eine Schnittstelle eingelesen wird; ein Fensterkontakt; eine Meldung von einer Alarmanlage).

### Bezugszeichen

- R: Raum
- RT1, RT2: Raumtemperaturfühler
- RTmp, RT: Raumtemperatur
- PA: Permanente Anpassungen
- TA: Temporäre Anpassungen
- H/K: Heizung/Kühlung (Stellglied)
- C: Uhr
- T: Zeit
- SE1, SE2: Steuereinheit
- BF: Betriebsfunktionen
- Eco: Eco-Funktionen
- NI/SW: Niveau/Sollwert
- Fkt: Regel-/Steuerfunktionen
- VE: Virtuelles Schaltelement
- A: Anordnung
- V: Vorrichtung
- BE1, BE2: Bedienungseinrichtung
- EM1, EM2: Eingabemittel
- AM1, AM2: Ausgabemittel
- WKF: Wärmer-/Kälterfunktion
- SW: Sollwert
- ZSP, ZSP1: Zeitschaltprogramm
- F-Par: Einstellwerte zu den Regel-/Steuerfunktionen
- E-Par: Grundeinstellwerte
- RTC: Echtzeituhr
- SM: Speichermittel
- HK: Stellglied Heizkreis
- KK: Stellglied Kühlkreis
- P: Prozessor
- SK: Signalkonverter
- Auto: Automatikbetrieb
- A1 - A3: Analyseschritt
- Z1 - Z11: Zustand
- w/k: Eingaben
- SP1 - SP5: Schaltpunkte
- OR1 - OR7: Override

## Patentansprüche

1. Verfahren zur Steuerung und Regelung mindestens einer Raumkomfortgrösse (RTmp, RT), insbesondere der Raumtemperatur (RTmp, RT), in einem Gebäude (R), das Verfahren umfassend:
Eingabe eines Bedarfssignals (w/k) hinsichtlich einer Veränderung der Raumkomfortgrösse (RTmp, RT), wobei die Eingabe durch einen Benutzer an einer Bedienungseinrichtung (BE1, BE2) für ein System zum Regeln beziehungsweise Steuern der Raumkomfortgrösse (RTmp, RT) erfolgt;
Analyse des Bedarfssignals (w/k) auf Basis von aktuellen Zustandsdaten des Systems und Aktivierung entsprechender Stellgrössen des Systems durch eine Steuereinrichtung, um die entsprechende Veränderung der Raumkomfortgrösse (RTmp, RT) zu erhalten, wobei die Eingabe des Bedarfssignals (w/k) nur durch eine Eingabe einer Veränderungsrichtung hinsichtlich der Raumkomfortgrösse (RTmp, RT) erfolgt;
wobei eine temporäre Veränderung (OR1 - OR7) der aktuellen Zustandsdaten des Systems bis zum Eintreffen eines Ereignisses erfolgt;
wobei das Bedarfssignal hinsichtlich der Veränderung der Raumkomfortgrösse eine Eingaberichtung ausgewählt aus wärmer oder kälter umfasst;
wobei die Benutzereingaben (w/k) hinsichtlich des Bedarfssignals protokolliert und statistisch ausgewertet werden, und wobei Parameter des Gerätes basierend auf der statistischen Auswertung verändert werden;
**dadurch gekennzeichnet, dass**
eine das Ereignis darstellende Zeitspanne auf Basis der statistischen Auswertung der Benutzereingaben (w/k) hinsichtlich des Bedarfssignals definiert ist.

2. Verfahren nach Anspruch 1, wobei das Ereignis im Ablauf der definierten Zeitspanne liegt.

3. Verfahren nach Anspruch 1 oder 2, wobei das Ereignis eine weitere Eingabe an der Bedienungseinrichtung (BE1, BE2) ist.

4. Verfahren nach einem der vorstehenden Ansprüche, wobei das Ereignis ein Schaltpunkt (SP1 - SP5) in einem Zeitschaltprogramm (ZSP, ZSP1) für die Steuerung bzw. Regelung ist.

5. Verfahren nach einem der vorstehenden Ansprüche, wobei das Ereignis ein der Steuerung bzw. Regelung zugeführtes externes Signal ist.

6. Verfahren nach einem der vorstehenden Ansprüche, wobei bei der Analyse des Bedarfssignals (w/k) Eco-Funktionsparameter (Eco) des Systems überprüft und bei Bedarf entsprechend verändert werden.

7. Verfahren nach einem der vorstehenden Ansprüche, wobei bei der Analyse des Bedarfssignals (w/k) der Zustand eines Zeitschaltprogramms (ZSP, ZSP1) für die Steuerung des Systems überprüft und bei Bedarf entsprechend verändert wird.

8. Verfahren nach einem der vorstehenden Ansprüche, wobei bei der Analyse des Bedarfssignals (w/k) ein Sollwert (SW) für die Raumkomfortgrösse (RTmp, RT) überprüft und bei Bedarf entsprechend verändert wird.

9. Verfahren nach Anspruch 8, wobei bei der Überprüfung der Raumkomfortgrösse (RTmp, RT) eine aktuelle Raumtemperatur mitberücksichtigt wird.

## Claims

1. Method for controlling at least one room comfort value (RTmp, RT), in particular the room temperature (RTmp, RT), in a building (R), the method comprising:
inputting of a demand signal (w/k) in respect of a change in the room comfort value (RTmp, RT), wherein the inputting is performed by a user on an operating device (BE1, BE2) for a system for controlling the room comfort value (RTmp, RT);
analysis of the demand signal (w/k) on the basis of current state data of the system and activation of corresponding manipulated variables of the system by a control device to obtain the corresponding change in the room comfort value (RTmp, RT), wherein the demand signal (w/k) is inputted solely by inputting a change direction in respect of the room comfort value (RTmp, RT);
wherein a temporary change (OR1 - OR7) of the current state data of the system obtains until an event occurs.
wherein the demand signal in respect of a change in the room comfort value comprises an input direction selected from warmer or cooler
wherein the user inputs (w/k) in respect of the demand signal are logged and statistically evaluated, and wherein the parameters of the device are changed based on the statistical evaluation;
**characterised in that**
a time period constituting the event is defined on the basis of the statistical evaluation of the user inputs (w/k) in respect of the demand signal.

2. Method according to claim 1, wherein the event is the expiry of the defined period of time.

3. Method according to claim 1 or 2, wherein the event is another input on the operating device (BE1, BE2).

4. Method according to one of the preceding claims, wherein the event is a switching point (SP1 - SP5) in a timer program (ZSP, ZSP1) for the control system.

5. Method according to one of the preceding claims, wherein the event is an external signal applied to the control system.

6. Method according to one of the preceding claims, wherein, in the analysis of the demand signal (w/k), ECO function parameters (ECO) of the system are checked and changed as required.

7. Method according to one of the preceding claims, wherein, in the analysis of the demand signal (w/k), the state of a timer program (ZSP, ZSP1) for the control of the system is checked and changed as required.

8. Method according to one of the preceding claims, wherein, in the analysis of the demand signal (w/k), a setpoint value (SW) for the room comfort value (RTmp, RT) is checked and, if necessary, changed accordingly.

9. Method according to claim 8, wherein, a current room temperature is taken into account in the checking of the room comfort value (RTmp, RT).

## Revendications

1. Procédé de commande et de régulation d'au moins une grandeur de confort ambiant (RTmp, RT), notamment de la température ambiante (RTmp, RT) dans un bâtiment (R), le procédé comprenant :
l'entrée d'un signal de demande (w/k) concernant une modification de la grandeur de confort ambiant (RTmp, RT), dans lequel l'entrée s'effectue par un utilisateur sur un dispositif de manœuvre (BE1, BE2) d'un système de régulation ou de commande de la grandeur de confort ambiant (RTmp, RT),
l'analyse du signal de demande (w/k) sur la base des données d'état instantanées du système et l'activation des grandeurs de réglage correspondantes du système par un organe de commande, afin d'obtenir la modification correspondante de la grandeur de confort ambiant (RTmp, RT), dans lequel l'entrée du signal de demande (w/k) s'effectue uniquement par une entrée d'une direction de modification concernant la grandeur de confort ambiant (RTmp, RT),
dans lequel une modification temporaire (OR1 - OR7) des données d'état instantanées du système s'effectue jusqu'à l'arrivée d'un événement,
dans lequel le signal de demande concernant la modification de la grandeur de confort ambiant comprend une direction d'entrée sélectionnée entre plus chaud ou plus froid,
dans lequel les entrées d'utilisateur (w/k) concernant le signal de demande sont enregistrées et évaluées statistiquement, et dans lequel des paramètres de l'appareil sont modifiés sur la base de l'évaluation statistique,
**caractérisé en ce qu'**une période de temps représentant l'évènement est définie sur la base de l'évaluation statistique des entrées d'utilisateur (w/k) concernant le signal de demande.

2. Procédé selon la revendication 1, dans lequel l'évènement se situe dans l'expiration de la période de temps définie.

3. Procédé selon la revendication 1 ou 2, dans lequel l'évènement est une entrée supplémentaire sur le dispositif de manœuvre (BE1, BE2).

4. Procédé selon l'une des revendications précédentes, dans lequel l'évènement est un point de commutation (SP1 - SP5) dans un programme d'horloge (ZSP, ZSP1) de la commande ou la régulation.

5. Procédé selon l'une des revendications précédentes, dans lequel l'évènement est un signal externe alimenté à la commande ou la régulation.

6. Procédé selon l'une des revendications précédentes, dans lequel, lors de l'analyse du signal de demande (w/k), des paramètres de fonction Eco (Eco) du système sont vérifiés et modifiés en conséquence si nécessaire.

7. Procédé selon l'une des revendications précédentes, dans lequel, lors de l'analyse du signal de demande (w/k), l'état d'un programme d'horloge (ZSP, ZSP1) de la commande du système est vérifié et est modifié en conséquence si nécessaire.

8. Procédé selon l'une des revendications précédentes, dans lequel, lors de l'analyse du signal de demande (w/k), une valeur de consigne (SW) de la grandeur de confort ambiant (RTmp, RT) est vérifiée et modifiée en conséquence si nécessaire.

9. Procédé selon la revendication 8, dans lequel, lors de la vérification de la grandeur de confort ambiant (RTmp, RT), une température ambiante instantanée est également prise en compte.
